# EUROPÄISCHE PATENTSCHRIFT

(11) **EP 2 768 755 B1**
(45) Veröffentlichungstag und Bekanntmachung des Hinweises auf die Patenterteilung: **10.10.2018**
(21) Anmeldenummer: 12790437.3
(22) Anmeldetag: 18.10.2012
(51) Int. Cl.: B66B 5/02, B66B 1/34, B66B 1/24, B66B 5/00, G01B 21/16

(54) **VORRICHTUNG ZUR POSITIONSERFASSUNG EINER AUFZUGKABINE UND VERFAHREN ZUM BETREIBEN EINER AUFZUGANLAGE**
DEVICE FOR THE POSITION DETECTION OF AN ELEVATOR CAR AND METHOD FOR OPERATING AN ELEVATOR SYSTEM
DISPOSITIF POUR DÉTECTER LA POSITION D'UNE CABINE D'ASCENSEUR ET PROCÉDÉ POUR FAIRE FONCTIONNER UNE INSTALLATION D'ASCENSEUR

(30) Priorität: 18.10.2011 DE 102011054590
(43) Veröffentlichungstag der Anmeldung: 27.08.2014
(73) Patentinhaber: ELGO-Electronic GmbH & Co. KG, 78239 Rielasingen (DE)
(72) Erfinder: MÜLLER, Frank, 44229 Dortmund (DE); ESSINGER, Heiko, 78239 Rielasingen (DE)
(74) Vertreter: Patentanwälte Behrmann Wagner PartG mbB
(86) Internationale Anmeldenummer: PCT/EP2012/070696
(87) Internationale Veröffentlichungsnummer: WO 2013/057215

(56) Entgegenhaltungen:
- EP-A1- 1 679 279
- GB-A- 2 201 656
- US-A- 5 880 417
- US-A1- 2009 277 724

## Beschreibung

Die vorliegende Erfindung betrifft eine Vorrichtung zur Positionserfassung einer Aufzugkabine nach dem Oberbegriff des Hauptanspruchs bzw. des unabhängigen Patentanspruchs 4. Ferner betrifft die vorliegende Erfindung ein Verfahren zum Betreiben einer eine Aufzugkabine aufweisenden Aufzuganlage nach dem Oberbegriff der unabhängigen Patentansprüche 10 und 11.
Aus dem Stand der Technik sind gattungsbildende Vorrichtungen allgemein bekannt, wobei insbesondere auch gattungsgemäße, sich typischerweise entlang eines Aufzugsschachts und damit entlang der Verfahrrichtung der Aufzugkabine erstreckende Streifen als Träger für eine zur Positions- und/oder Geschwindigkeitsbestimmung der Aufzugkabine genutzte magnetische Kodierung allgemein bekannt sind. So zeigt etwa die DE 10 2009 054 337 A1 der Anmelderin eine gattungsbildende Vorrichtung, bei welcher das schlittenartig ausgebildete und entlang des Streifens verfahrbare Sensorgehäuse die Sensor- und Auswerteeinheit in Form geeigneter Magnetfeldsensoren sowie zugeordneter Dekodier- und Auswerteelektronik aufweist und das so erzeugte elektronische Signal weiteren nachgelagerten Steuereinheiten zur Verfügung stellt.

Dokument GB 2 201 656 A offenbart eine ähnliche Vorrichtung zur Positionserfassung einer Aufzugkabine nach dem Oberbegriff des Anspruchs 1 bzw. nach dem Oberbegriff des Anspruchs 4.

So ist es insbesondere im Zusammenhang mit sicherheitsrelevanter Aufzugtechnik bekannt und üblich, einer jeweiligen Aufzugkabine (für Personen- oder Lastenbetrieb) eine derartige, gattungsbildende Sensor- und Auswerteeinheit im Außenbereich der Kabine zuzuordnen. Im Aufzugsbetrieb erfolgt dann durch das kontinuierliche Ablesen der (relativ oder absolut vorgesehenen) magnetischen Kodierung auf dem relativ zum Sensorgehäuse stationären Streifen die jeweilige Datenerzeugung, mit der Möglichkeit der Positionsbestimmung sowie, daraus abgeleitet, einer Bestimmung der Geschwindigkeit der Aufzugkabine.

Als aus dem Stand der Technik vorauszusetzen sind ferner Notsysteme einer Aufzuganlage. Ein typisches derartiges Notsystem sieht etwa vor, dass als Reaktion auf einen kritischen Betriebs- und Bewegungszustand der Aufzugkabine, etwa das Überschreiten einer (gegebenenfalls von einer aktuellen Position abhängigen) Geschwindigkeitsschwelle, automatisch Sicherheitsmaßnahmen ausgelöst werden, wie etwa das Auslösen einer Bremsfunktion für den Aufzugsmotor oder das Aktivieren einer Fangbremse für die Aufzugkabine.

Der Erfassungssicherheit kommt dabei eine besondere Bedeutung zu, daher sind üblicherweise die Sensor- und Auswerteeinheiten redundant ausgebildet, d.h. als zwei Funktionseinheiten, welche im Wesentlichen zueinander parallel und unabhängig voneinander vorgesehen und betrieben werden. Diese können jeweils als Reaktion auf das Erreichen z.B. einer Geschwindigkeitsschwelle die Notfallfunktion aktivieren.

Trotz der durch die beschriebene und als gattungsbildend bekannt vorausgesetzten Technologie der Geschwindigkeits- und Positionserfassung einer Aufzugkabine relativ zu einem (stationären und typischerweise magnetisierten oder auf andere Weise codierten) Streifen ist es gleichwohl nach wie vor in der Aufzug-Anlagentechnik üblich, sicherheitsrelevante Funktionalitäten mit mechanischen Schaltern oder dergleichen Aggregaten abzusichern. Ein derartiger Fall ist etwa das Einrichten von sogenannten Sicherheits- bzw. Abschaltpositionen einer Aufzugkabine in einem Schacht bei Wartungsbetrieb: Wenn etwa eine Wartungsperson während eines solchen Wartungsbetriebs sich auf dem Boden des Aufzugsschachts aufhält, wird, typischerweise durch Aktivierung eines geeigneten (Schlüssel-) Schalters, ein durch die Aufzugkabine betätigbarer mechanischer, stationärer Endschalter aktiviert, welcher so im Schacht positioniert ist, dass eine sich abwärts bewegende Aufzugkabine durch Notabschaltung angehalten wird, sobald diese (bei Erreichen des Schalters) eine freie Mindesthöhe im Schacht als Sicherheitsabstand für die Person zu erreichen oder zu unterschreiten droht. Derartige mechanische Endschalter sind jedoch wartungsaufwändig bzw. bieten die potentielle Gefahr von Fehlfunktionen oder dergleichen, mit der damit verbundenen Gefahr für das Wartungspersonal. Dabei finden derartige Mindest- Sicherheitsabstände sowohl Anwendung in einem unteren (bodenseitigen) Aufzugsschachtbereich, als auch etwa in einem oberen Schachtbereich (dann als freier Bereich zwischen einer Aufzugkabinendecke und einem oberen Schachtende); auch hier werden, traditionell über mechanische, stationär am Schacht vorgesehene Schalter die Sicherheitsabstände gewahrt.

Weiteres sicherheitsrelevantes Optimierungspotential in der Realisierung und im Betrieb von Aufzuganlagen besteht in einem Schutz vor Fehlfunktionen (und damit einer möglichen Gefährdung von Aufzugkabinenpassagieren) an jeweiligen Haltepositionen entlang des Schachts: Typischerweise entsprechen diese Haltepositionen jeweiligen Stockwerken, so dass bei geöffneter Aufzugkabinentür die Passagiere in die Aufzugkabine ein- bzw. austreten können. Dabei wird die Aufzugkabine an der jeweils vorgesehenen Position durch entsprechende Bremsmittel gehalten. Gleichzeitig können jedoch unbeabsichtigte Bewegungen der Aufzugkabine in einem solchen Kabinenhalte- und Türöffnungszustand für Gefährdungssituationen sorgen, etwa wenn Antriebs- und/oder Bremsdefekte die Kabine nicht genau in der Vertikalposition halten oder unbeabsichtigt bewegen.

Aufgabe der vorliegenden Erfindung ist es daher, eine gattungsgemäße Vorrichtung zur Positionserfassung einer Aufzugkabine im Hinblick auf die Betriebs- und Wartungssicherheit einer damit realisierten Aufzuganlage zu verbessern, insbesondere während eines Kabinen-Haltezustands (und geöffneter Kabinentür) für zusätzliche Sicherheit im Aufzugbetrieb zu sorgen, und/oder in einem Wartungsbetrieb einer Aufzuganlage die Sicherheit von im Aufzugsschacht mit der Wartung befassten Personen zu erhöhen. Dabei ist insbesondere ein apparativer bzw. Hardware-Aufwand zu minimieren, es sind die Gefährdungspotentiale traditionell-mechanischer Sensoren bzw. Schalter zu minimieren, und es ist generell die Überwachbarkeit von derartigen Vorrichtungen zu verbessern.

Diese Aufgabe wird durch die Vorrichtung zur Positionserfassung einer Aufzugkabine mit den Merkmalen des Hauptanspruchs sowie des unabhängigen Patentanspruchs 4 gelöst. Ferner wird die Aufgabe durch das Verfahren zum Betreiben einer Aufzuganlage nach den Verfahrensansprüchen 10 und 11 gelöst, wobei diese Verfahren insbesondere auch das Betreiben einer Vorrichtung zur Positionserfassung nach den Ansprüchen 1 bzw. 4 betreffen können. Vorteilhafte Weiterbildungen der Erfindung sind in den Unteransprüchen beschrieben.

Während die unabhängigen Patentansprüche 1 und 4 bzw. 10 und 11 formal gesonderte Schutzgegenstände betreffen, ist es gleichwohl weiterbildungsgemäß und vorteilhaft von der Erfindung umfasst, die so beschriebenen erfindungsgemäßen Funktionalitäten auch in Kombination vorzusehen, so dass insbesondere eine Vorrichtung nach dem Hauptanspruch durch die weiteren Merkmale des unabhängigen Patentanspruchs 4 weitergebildet werden kann und umgekehrt; gleichermaßen ist das Verfahren nach dem unabhängigen Patentanspruch 10 als zusätzlich weiterbildbar durch die Verfahrensmerkmale des unabhängigen Patentanspruchs 11 (und umgekehrt) Teil der Offenbarung der vorliegenden Erfindung.

Damit wird zunächst vorteilhaft erreicht, dass das gattungsgemäß angebotene bzw. erzeugte Positions- und/oder Geschwindigkeitssignal (erzeugt durch Abtasten und nachfolgendes Auswerten der auf dem Streifen vorgesehenen, bevorzugt magnetischen Kodierung, wobei diese Kodierung alternativ auch optisch oder mechanisch abtastbar sein kann) Anwendung findet für die weitere sicherheitsrelevante Überwachung der Sicherheits-Halteposition(en) im Schacht und/oder zur Überwachung einer nicht ordnungsgemäßen (d.h. entsprechende Schwellwerte überschreitenden) Bewegung der Aufzugkabine in einem Haltezustand bei geöffneter Aufzugtür. Mit anderen Worten, die vorliegende Erfindung erreicht in überraschend einfacher und effizienter Weise, dass zusätzliche Sicherheit (bzw. eine wesentlich betriebssicherere und wartungsärmere Alternative zu traditioneller Schaltsensorik) erreicht werden kann durch weitergehende Auswertung eines ohnehin bereits als Rohsignal vorhandenen Positions- bzw. Geschwindigkeitssignals.

Damit ist es dann hauptanspruchsgemäß möglich, bewegungsrelevante Größen der Aufzugkabine zu erfassen, nämlich etwa eine Geschwindigkeit einer Aufzugbewegung, eine Beschleunigung einer Aufzugkabine und/oder einen Bewegungshub der Aufzugkabine (etwa bezogen auf einen vorbestimmten Zeitraum und/oder einen Amplitudenbereich im Fall einer Schwingung), diese Größen dann entsprechenden Normgrößen als Schwellwerten gegenüberzustellen und damit zeitnah, hochgradig betriebssicher und ohne die Notwendigkeit zusätzlicher mechanischer Sensoren auf etwaige Fehlfunktionen zu schließen. Dies kann dann im Rahmen der ohnehin vorhandenen Sicherheitsfunktionalität zum Auslösen entsprechender Notfallmaßnahmen, wie zu einem Nothalt, führen.

Gleichermaßen gestattet, gemäß unabhängigem Patentanspruch 4, diese technische Infrastruktur das Definieren der Sicherheits-Halteposition(en), etwa einends (z.B. im Schachtboden), oder beidends der mittels des Streifens realisierten Führung (jeweils unter Berücksichtigung der für den Sicherheitsraum bzw. Sicherheitsabstand notwendigen Längenmarge). Gerade hier entfällt dann die Notwendigkeit eines stationären, wartungsintensiven und potentiell fehlerträchtigen Endschalters an jeweiligen Positionen, so dass nicht nur apparativer Aufwand reduziert, sondern zusätzlich Betriebssicherheit signifikant erhöht werden kann.

In der erfindungsgemäßen Weiterbildung, wobei diese jeweiligen Erfindungsaspekte auch aufeinander bezogen und insoweit einander weiterbilden können, bietet dann etwa die Sensor- und Auswerteeinheit zusätzlich die Möglichkeit, ein Aufzugtür-Freigabesignal zu erzeugen: Dadurch, dass etwa durch das Positionssignal (im Vergleich mit geeignet vorgegebenen, etwa Stockwerkspositionen entsprechenden Vergleichssignalen) genau eine aktuelle Aufzugkabinenposition einer solchen Vorgabe zugeordnet werden kann, ermöglicht weiterbildungsgemäß das Erzeugen des Aufzugtür-Freigabesignals, dass überhaupt erst als Reaktion auf dieses Freigabesignal ein Öffnungsbetrieb der Kabinentür erfolgen kann, so dass die Betriebssicherheit zusätzlich erhöht werden kann. Insbesondere empfängt weiterbildungsgemäß die erfindungsgemäße Überwachungseinheit dieses Aufzugtür-Freigabesignal und macht ihren Betrieb insoweit von dieser zusätzlichen Erfassung abhängig.

Dabei kann es nach wie vor in der praktischen Weiterbildung der Erfindung sinnvoll und nützlich sein, manuell bzw. mechanisch betätigbare Schalter bzw. Moduswahleinheiten vorzusehen, etwa um den erfindungsgemäßen Wartungsbetrieb sowie die damit vorgesehene Funktionalität zu aktivieren. Insoweit würde dann die Wartungsperson, vor dem Betreten des Aufzugsschachts, eine derartige (potentiell mit weiteren Sicherungsmitteln gesicherte) Aktivierung vornehmen müssen.

Während die vorliegende Erfindung prinzipiell als "Vorrichtung zur Positionserfassung einer Aufzugkabine" die erfindungsgemäß beanspruchten Aggregate auch unabhängig von einem konkreten Kabinen- bzw. Anlagenkontext vorsieht (also etwa als geeignete Anordnung aus Sensor- und Elektronikkomponenten), ist die vorliegende Erfindung gleichwohl hierauf nicht beschränkt. So betreffen sowohl die erfindungsgemäßen Verfahren auch den Betrieb einer Aufzuganlage, wie auch eine Aufzuganlage (mit zugehörigen Aufzugkabine) als System und Kontext und alternativ zum Anspruchswortlaut als zur Erfindung gehörig offenbart gelten soll.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: ein schematisches Blockschaubild zum Verdeutlichen wesentlicher Funktionskomponenten der vorliegenden Erfindung, integriert in ein gemeinsames Ausführungsbeispiel und
- Fig. 2: eine Schemaansicht einer Aufzuganlage zum Verdeutlichen des Hintergrunds und Einsatzkontext der vorliegenden Erfindung.

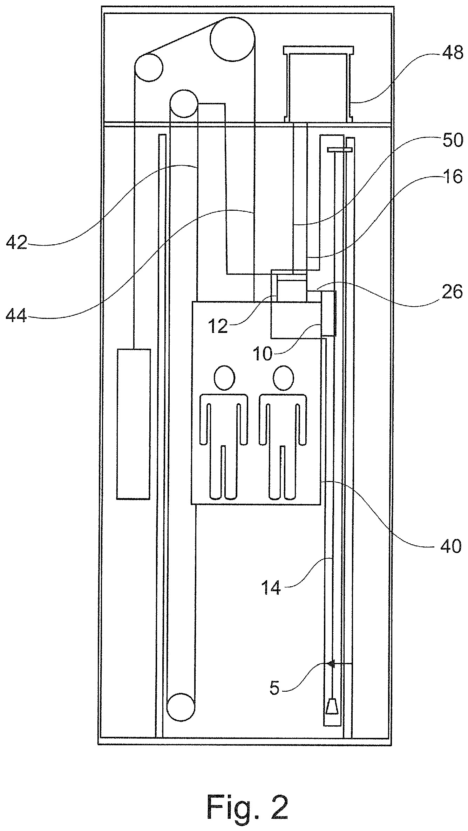

So zeigt die Fig. 2 in der Schemadarstellung eine Aufzuganlage mit einer Aufzugkabine 40, welche, schematisch dargestellt, an einer Antriebseinheit 42, 44 in vertikaler Richtung im Aufzugsschacht bewegt werden kann.

An der Aufzugkabine 40 sitzt eine Vorrichtung zur Positionserfassung, bestehend aus einem Sensorgehäuse 10 sowie einem damit über eine Kabelverbindung 26 verbundenen Schaltgehäuse 12. Dieses Schaltgehäuse 12 ist über eine Leitungsanordnung 46 mit einer im Stirnbereich des Aufzugsschachts sitzenden Aufzug-Steuereinheit 48 verbunden, von wo aus die verschiedensten Betriebszustände der gezeigten Aufzuganlage gesteuert werden und auch etwaige Notfallmaßnahmen (wie etwa ein Nothalt) ausgelöst werden.

Das Sensorgehäuse 10, aufweisend eine Sensor- und Auswerteeinheit für eine Positionserfassung sowie zur Feststellung einer Aufzuggeschwindigkeit daraus, wird zusammen mit einem feststehenden Magnetband 14, welches sich, vertikal mit Spannmitteln 50 verspannt, quasi-stationär in vertikaler Richtung im Aufzugsschacht erstreckt.

In ansonsten bekannter Weise, etwa beschrieben in der DE 10 2009 054 337 A1 der Anmelderin, weist die Sensor- und Auswerteeinheit im Sensorgehäuse 10 eine Anordnung von Magnetsensoren auf, welche eine permanentmagnetische Absolutkodierung des Magnetbandes auslesen und in eine Positionsinformation umwandeln; auch steht mit einem (durch Bewegung der Aufzugkabine) veränderten Positionssignal eine Grundlage für eine Geschwindigkeitserfassung (und damit ein Geschwindigkeitssignal) der Kabine zur Verfügung.

Über das Kabel 26 an das Sensorgehäuse 10 angebunden, stellt das Schaltgehäuse 12 zunächst die Verbindung zur Aufzug-Steuereinheit 48 her. Darüber hinaus sind im Schaltgehäuse 12 verschiedene sicherheitsrelevante Einheiten vorgesehen, insbesondere eine Schalteinheit, welche für eine Notfunktion aktivierbar ist. Typischerweise besteht diese Schalteinheit aus einem Relais 30, welches als Reaktion auf eine Aktivierung einen Bremsbetrieb (etwa eine Motorbremse des Aufzugantriebs 42, 44, alternativ eine geeignet im Aufzugsschacht vorgesehene, nicht gezeigte Fangbremse) auslöst und so für einen Stopp der Aufzugkabine sorgt.

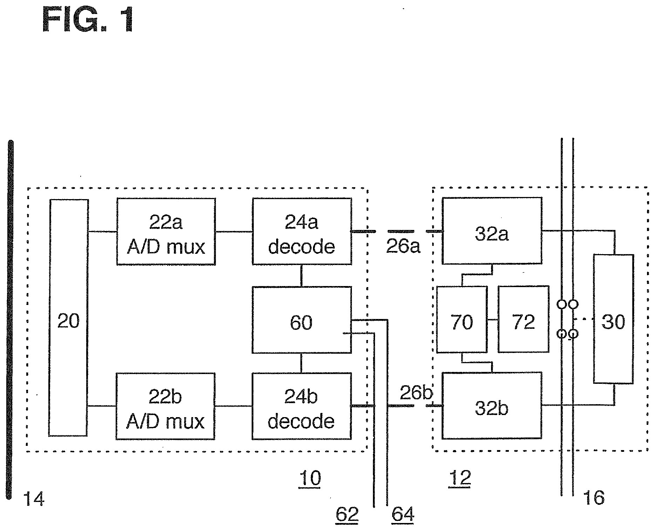

Das Blockschaubild der Fig. 1 verdeutlicht im Detail die funktionswesentlichen Komponenten, welche in ansonsten bekannter Art durch jeweilige Sensor- und Elektronikbaukomponenten praktisch realisiert werden können. So enthält das Sensorgehäuse 10 die Sensor- und Auswerteeinheit in redundanter Anordnung: Eine schematisch dargestellte Magnetfeldsensorik 20 (vgl. etwa zur weiteren Erläuterung die genannte DE 10 2009 054 337 A1) wird redundant in Form von zwei parallel voneinander und unabhängig eingerichteten Zweigen (a/b) zunächst verstärkt, A/D-gewandelt und in ein Multiplexsignal umgesetzt (Einheiten 22a, 22b), woraufhin dann in den Einheiten 24a, 24b die eigentliche Dekodierung, eingeschlossen eine Feinpositionierung durch Extrapolation der erfassten permanenten Magnetsignale (in ansonsten bekannter Weise) erfolgt. Diese Funktionalitäten der Einheiten 22, 24 (jeweils für die Zweige a, b) sind realisiert in Form typischer, Mikrocontroller-basierter Schaltungskonfigurationen, welche für den Zweck geeignet programmiert sind.

Die Einheiten 24a, 24b sind zudem verbunden mit einer schematisch dargestellten Überwachungseinheit 60 (wiederum geeignet mittels einer programmierten Mikrocontroller-Einheit, ggf. auch im Rahmen derselben ohnehin vorhandenen Einheiten, realisiert), welche einerseits, symbolisiert durch die Leitung 62, ein Aufzugtür-Öffnungssignal erhält, andererseits, über die schematisch gezeigte Leitung 64, selbst an die Steuereinheit 48 ein Aufzugtür-Freigabesignal bereitstellt.

Die Bezugszeichen 26a, 26b der Kabelverbindung 26 verdeutlichen, wie die redundante Sensor- und Auswerteeinheit 22, 24 im Sensorgehäuse 10 zweikanalig kommuniziert mit dem Schaltgehäuse 12, welches zunächst, durch beide Zweige auslösbar, die Relaisanordnung 30 mit der gezeigten Sicherheitsfunktion aufweist. So führt insbesondere ein Unterbrechen der zugehörigen Leitung 16 zu einem Auslösen der beschriebenen Sicherheitsfunktion(en), etwa einer Motor- und/oder Fangbremse für die Aufzugkabine.

Diese Steuerfunktionalität wird im Ausführungsbeispiel der Fig. 1 realisiert durch eine wiederum paarweise (a/b) vorgesehene Steuereinheit 32, welche im Schaltgehäuse 12 vorgesehen ist. Zusätzlich im Gehäuse 12, und kommunizierend mit der Steuereinheit 32a, 32b, ist eine Sicherheitspositionseinheit 70, welche über die Zweige 22-24-26-32 (redundant) eine aktuelle Aufzugspositionsinformation empfängt und diese mit Soll-Werten vergleicht, welche in der (symbolisch angebunden gezeigten) Speichereinheit 72 gespeichert sind. Derartige Soll-Werte können etwa Sicherheitsabstände sein, welche in einem (geeignet aktivierbaren, in den Fig. nicht gezeigt) Wartungsmodus diejenige(n) Sicherheitsposition(en) vorgeben, welche die Aufzugkabine unten und/oder oben im Aufzugsschacht einhalten muss, um eine dort potentiell befindliche Wartungsperson zu schützen.

Im Betrieb ermöglicht es daher die in Fig. 1 schematisch gezeigte und in der Anlage der Fig. 2 verbaute Vorrichtung, mittels der Überwachungseinheit 60 zunächst eine Halteposition der Aufzugkabine sowie einen Türöffnungszustand der Aufzugtür festzustellen und in diesem Zustand, durch Auswertung der Positions- und/oder Geschwindigkeitssignale, eine Bewegung der Aufzugkabine zu überwachen. Entsprechend würde bei Überschreiten vorgegebener (geeignet in der Einheit 60 vorgesehener bzw. programmierter oder konfigurierter) Schwellwerte dann der Nothalt (durch Relais 30) ausgelöst werden können. Zu diesem Zweck verarbeitet die Einheit 60 nicht nur das (redundant herangeführte) dekodierte Positions- bzw. Geschwindigkeitssignal der Einheiten 24a, 24b, zusätzlich liegt in Form des Eingangs 62 eine Information über den Öffnungszustand der Aufzugtür vor. Auch gestattet es die Einheit 60 vorteilhaft, mittels der Leitung 64 überhaupt erst das Öffnen der Aufzugtür freizugeben, wenn nämlich das von den Einheiten 24a, 24b erhaltene Positionssignal (etwa im Vergleich mit geeignet vorgesehenen, Stockwerkspositionen entsprechenden Speicherwerten) zeigt, dass sich die Kabine an einer zur Türöffnung geeigneten Position befindet.

Im gezeigten Ausführungsbeispiel in Kombination mit dieser Funktionalität erreicht die Einheit 70 vorteilhaft, dass in einem geeignet vorgegebenen bzw. eingerichteten Wartungsbetrieb (z.B. aktivierbar durch einen nicht gezeigten Schlüsselschalter) vorbestimmte und von einem Aufzugs-Dauerbetrieb verschiedene Sicherheits-Haltepositionen bestimmt, überwacht und als Grundlage für ein Abschalten bzw. einen Halt der Aufzugkabine bei Erreichen bzw. Überschreiten herangezogen werden können. Dabei bedarf es keiner gesonderten (etwa mechanischen) Schalter- oder Sensortechnologie im Aufzugsschacht.

Die vorliegende Erfindung ist nicht auf das beschriebene Ausführungsbeispiel beschränkt. So ist es etwa weiterbildungsgemäß bzw. alternativ möglich, lediglich eine der Einheiten 60 oder 70 zur Realisierung der Erfindung vorzusehen, wie auch diese Einheiten lediglich im Rahmen des Sensorgehäuses 10 allein vorgesehen sein können, so dass etwa das Schaltergehäuse 12 ein rein passives Gehäuse mit Relais 30 sein kann und sämtliche elektronische Auswertung ausschließlich im Gehäuse 10 stattfindet.

### Bezugszeichenliste

- 10: Sensorgehäuse
- 12: Schaltgehäuse
- 14: Magnetband
- 16: Leitung
- 20: Magnetfeldsensor
- 22, 24: Sensor- und Auswerteeinheit
- 22, 24, 26, 32: Zweig
- 22a, 22b, 24a, 24b: Einheit
- 26: Kabelverbindung
- 30: Relais
- 32: Steuereinheit
- 32a, 32b: Steuereinheit
- 40: Aufzugkabine
- 42, 44: Aufzugantrieb
- 46: Leitungsanordnung
- 48: Aufzug-Steuereinheit
- 50: Spannmittel
- 60: Überwachungseinheit
- 62, 64: Leitung
- 70: Sicherheitspositionseinheit
- 72: Speichereinheit

## Patentansprüche

1. Vorrichtung zur Positionserfassung einer Aufzugkabine (40) mit
einer an der Aufzugkabine vorsehbaren und zum Zusammenwirken mit einer eine Längen- und/oder Positionskodierung aufweisenden Streifen (14) ausgebildeten, in einem Sensorgehäuse (10) aufgenommenen Sensor- und Auswerteeinheit (20, 22, 24),
die mit einer Schalteinheit (12) verbunden ist,
die einen Sicherheitsschalter (30) und/oder Unterbrecherkontakt für eine Notfallfunktion, insbesondere einen Nothalt der Aufzugkabine anbietet, wobei die Sensor- und Auswerteeinheit zur Erzeugung eines Positions- und/oder Geschwindigkeitssignals aus der Längen- bzw. Positionskodierung sowie zum Erzeugen oder Empfangen eines einem Öffnungszustand einer Aufzugkabinentür entsprechenden Aufzugkabinentür-Zustandssignals (62) ausgebildet ist,
**dadurch gekennzeichnet, dass**
der Sensor- und Auswerteeinheit Überwachungsmittel (60) zum Aktivieren der Schalteinheit so zugeordnet und ausgebildet sind,
dass als Reaktion auf das Positions- bzw. Geschwindigkeitssignal sowie das Aufzugkabinentür-Zustandssignal die Notfallfunktion dann aktiviert werden kann, wenn bei der geöffneten Aufzugkabinentür eine Kabinenbewegung einen vorbestimmten Geschwindigkeitsschwellwert und/oder Beschleunigungsschwellwert und/oder Bewegungshubschwellwert überschreitet.

2. Vorrichtung nach Anspruch 1,
**dadurch gekennzeichnet, dass**
die Sensor- und Auswerteeinheit zum zusätzlichen Erzeugen eines Aufzugkabinentür-Freigabesignals (64) aus dem Positionssignal ausgebildet ist, wobei der Aufzugkabinentür zuordenbare Steuermittel als Reaktion auf das Aufzugkabinentür-Freigabesignal einen Öffnungsbetrieb der Aufzugkabinentür aktivieren können.

3. Vorrichtung nach Anspruch 1 oder 2,
**dadurch gekennzeichnet, dass**
die Überwachungseinheit (60) so ausgebildet ist, dass die Schalteinheit abhängig von dem Aufzugkabinentür-Freigabesignal aktiviert wird.

4. Vorrichtung zur Positionserfassung einer Aufzugkabine (40) mit
einer an der Aufzugkabine vorsehbaren und zum Zusammenwirken mit einer eine Längen- und/oder Positionskodierung aufweisenden Streifen (14) ausgebildeten, in einem Sensorgehäuse (10) aufgenommenen Sensor- und Auswerteeinheit (20, 22, 24),
die mit einer Schalteinheit (12) verbunden ist,
die einen Sicherheitsschalter und/oder Unterbrecherkontakt für eine Notfallfunktion, insbesondere einen Nothalt, der Aufzugkabine anbietet,
wobei die Sensor- und Auswerteeinheit zur Erzeugung eines Positionssignals aus der Längen- bzw. Positionskodierung ausgebildet ist,
**dadurch gekennzeichnet, dass**
die Sensor- und Auswerteeinheit eine Sicherheitspositionseinheit (70) aufweist, die so zum Vergleichen des Positionssignals mit einem vorbestimmten, bevorzugt gespeicherten Positionswert (72) in einem von einem Aufzugs-Normalbetrieb verschiedenen Wartungsbetrieb ausgebildet ist, das als Reaktion auf das Erreichen über Überschreiten bzw. Unterschreiten einer dem vorbestimmten Positionswert entsprechenden Verfahrposition der Aufzugkabine die Schalteinheit für einen Nothalt als Notfallfunktion ausgelöst wird.

5. Vorrichtung nach Anspruch 4,
**dadurch gekennzeichnet, dass**
der vorbestimmte Positionswert einer zumindest einends, bevorzugt beidends, des Streifens vorgesehenen Verfahrposition der Aufzugkabine, beabstandet vom Streifenende und/oder einem Schachtende der Aufzugkabine um einen einer Arbeitshöhe einer Wartungsperson entsprechenden Abstand, entspricht.

6. Vorrichtung nach Anspruch 4 oder 5,
**dadurch gekennzeichnet, dass**
die Sicherheitspositionseinheit mit manuell und/oder mechanisch betätigbaren Schalt- oder Betriebsmoduswahlmitteln zusammenwirkt, die zum Aktivieren des Wartungsbetriebs betätigbar sind.

7. Vorrichtung nach einem der Ansprüche 1 - 6,
**dadurch gekennzeichnet, dass**
die Sensor- und Auswerteeinheit zum Zusammenwirken mit dem eine Absolutkodierung tragenden Streifen und zum Ermitteln einer Positions- und/oder Geschwindigkeitsinformation daraus ausgebildet ist.

8. Vorrichtung nach einem der Ansprüche 1 - 7,
**dadurch gekennzeichnet, dass**
die Sensor- und Auswerteeinheit redundant mit einem Paar von unabhängig voneinander eine Positions- und/oder Geschwindigkeitsermittlung der Aufzugkabine durchführenden elektronischen Steuereinheiten (22, 24) versehen ist.

9. Vorrichtung nach einem der Ansprüche 1 - 8,
**dadurch gekennzeichnet, dass**
das Sensorgehäuse als zum Verfahren entlang des Streifens ausgebildete Messschlitteneinheit (10) realisiert ist, an welche über ein Verbindungskabel die physisch getrennt und benachbart vorgesehene Schalteinheit (12) angekoppelt ist.

10. Verfahren zum Betreiben der Vorrichtung nach einem der Ansprüche 1-3, 7-9 **gekennzeichnet durch** die Schritte:
- Detektieren eines Aufzugtür-Öffnungszustands der Aufzugkabine,
- Erfassen einer Bewegungsgeschwindigkeit, einer Beschleunigung und/oder eines Bewegungshubs der Aufzugkabine während des Aufzugtür-Öffnungszustands durch Abtasten und Auswerten einer entlang eines der Aufzugkabine zugeordneten Streifens vorgesehenen Längen- und/oder Positionskodierung und
- Auslösen einer Notfallfunktion, insbesondere eines Nothalts, der Aufzugkabine, wenn die Bewegungsgeschwindigkeit, die Beschleunigung und/oder der Bewegungshub einen vorbestimmten, insbesondere gespeicherten und/oder kodierten, Schwellwert übersteigt.

11. Verfahren zum Betreiben der Vorrichtung nach einem der Ansprüche 4 - 9, **gekennzeichnet durch** die Schritte:
- Aktivieren eines Wartungsmodus der Aufzuganlage,
- Vergleichen einer durch Auswerten einer entlang eines Streifens vorgesehenen Positionskodierung erhaltenen Positionssignals mit mindestens einem einer Sicherheits-Halteposition in der Aufzuganlage entsprechenden Positionswert und
- Auslösen eines Nothalts als Notfallfunktion der Aufzugkabine, wenn die Aufzugkabine die Sicherheits-Halteposition entlang des Streifens erreicht oder überschreitet.

## Claims

1. A device for identifying a position of an elevator cabin (40) having a sensor and evaluation unit (20, 22, 24) accommodated in a sensor casing (10), realized for interacting with a strip (14) comprising a length and/or position coding, capable of being provided on the elevator cabin and connected to a switch unit (12) which offers a safety switch (30) and/or a contact breaker point for an emergency function, in particular an emergency stop of the elevator cabin, said sensor and evaluation unit being realized for generating a position and/or speed signal from the length and/or position coding as well as for generating or receiving a status signal (62) of the elevator cabin door corresponding to an open status of an elevator door,
**characterized in that**
monitoring means (60) for activating the switch unit are allocated to the sensor and evaluation unit and realized such that the emergency function can be activated in response to the position and/or speed signal as well as to the status signal of the elevator cabin door if a cabin movement exceeds a predetermined speed threshold value and/or acceleration threshold value and/or movement travel threshold value when the elevator cabin door is open.

2. The device according to claim 1,
**characterized in that**
the sensor and evaluation unit is realized to additionally generate a release signal (64) of an elevator cabin door from the position signal, wherein control means, which can be allocated to the elevator cabin door, being capable of activating an opening mechanism of the elevator cabin door in response to the release signal of the elevator cabin door.

3. The device according to claim 1 or 2,
**characterized in that**
the monitoring unit (60) is realized such that the switch unit is activated as a function of the release signal of the elevator cabin door.

4. A device for identifying a position of an elevator cabin (40) having a sensor and evaluation unit (20, 22, 24) accommodated in a sensor casing (10), realized for interacting with a strip (14) comprising a length and/or position coding, being capable of being provided on the elevator cabin and connected to a switch unit (12), which offers a safety switch and/or a contact breaker point for an emergency function, in particular an emergency stop, of the elevator cabin, said sensor and evaluation unit being realized for generating a position signal from the length and/or position coding,
**characterized in that**
the sensor and evaluation unit comprises a safety position unit (70), which is realized for comparing the position signal using a predetermined, preferably stored, position value (72) in a maintenance mode differing to an elevator normal mode in such a manner that the switch unit is triggered for an emergency stop as an emergency function in response to attaining a displacement position of the elevator cabin corresponding to the predetermined position value via exceeding or falling below said displacement position.

5. The device according to claim 4,
**characterized in that**
the predetermined position value corresponds to at least one displacement position of the elevator cabin, said displacement position being provided on one end, preferably both ends, of the strip and said elevator cabin being distanced from the strip end and/or a shaft end of the elevator cabin by a distance corresponding to a work height of a maintenance worker.

6. The device according to claim 4 or 5,
**characterized in that**
the safety position unit interacts with manually and/or mechanically operable switch or operating mode selection means which can be operated for activating the maintenance mode.

7. The device according to any one of the claims 1 to 6,
**characterized in that**
the sensor and evaluation unit is realized for interacting with the strip carrying an absolute coding and for determining position and/or speed information therefrom.

8. The device according to any one of the claims 1 to 7,
**characterized in that**
the sensor and evaluation unit is provided redundantly with a pair of electronic control units (22, 24) executing independently of each other a position and/or speed determination of the elevator cabin.

9. The device according to any one of the claims 1 to 8,
**characterized in that**
the sensor casing is realized as a measurement slider unit (10) for being displaced along the strip, the physically separate and adjacent switch unit (12) being coupled to said measuring slider unit (10) via a connection cable.

10. A method for operating the device according to any one of the claims 1 to 3 and 7 to 9, **characterized by** the following steps:
- detecting an open status of an elevator door of the elevator cabin,
- identifying a movement speed, an acceleration and/or a movement stroke of the elevator cabin during the open status of the elevator door by sampling and evaluating a length and/or position coding provided along a strip allocated to the elevator door, and
- triggering an emergency function, in particular an emergency stop, of the elevator cabin if the movement speed, the acceleration and/or the movement stroke exceeds a predetermined, in particular stored and/or coded, threshold value.

11. A method for operating the device according to any one of the claims 4 to 9, **characterized by** the following steps:
- activating a maintenance mode of the elevator installation,
- comparing a position signal, which is obtained by evaluating a position coding provided along a strip, to at least one position value corresponding to a safety holding position in the elevator installation, and
- triggering an emergency stop as an emergency function of the elevator cabin if the elevator cabin reaches or exceeds the safety holding position along the strip.

## Revendications

1. Dispositif pour identifier une position d'une cabine d'ascenseur (40) ayant une unité de capteur et d'évaluation (20, 22, 24) accommodée dans un boîtier de capteur (10), réalisée pour interagir avec une bande (14) comprenant un codage de langueur et/ou de position, étant capable d'être prévue sur la cabine d'ascenseur et reliée à une unité d'interrupteur (12) qui offert un interrupteur de sécurité (30) et/ou une vis platinée pour un fonction d'urgence, en particulier un arrêt d'urgence de la cabine d'ascenseur, ladite unité de capteur et d'évaluation étant réalisée pour générer un signal de position et/ou de vitesse à partir du codage de langueur et/ou de position ainsi que pour générer ou recevoir un signal d'état (62) d'une porte de cabine d'ascenseur correspondant à un état d'ouverture de la porte d'ascenseur,
**caractérisé en ce que**
des moyens de surveillance (60) pour l'activation de l'unité d'interrupteur sont attribués à l'unité de capteur et d'évaluation et sont réalisés de telle manière que la fonction d'urgence peut être activée en réponse au signal de position et/ou de vitesse ainsi qu'au signal d'état de la porte de cabine d'ascenseur si un mouvement de cabine dépasse une valeur seuil de vitesse prédéterminée et/ou une valeur seuil d'accélération et/ou une valeur seuil de course de mouvement quand la porte de cabine d'ascenseur est ouverte.

2. Dispositif selon la revendication 1,
**caractérisé en ce que**
l'unité de capteur et d'évaluation est réalisée pour générer de plus un signal de libération (64) de la porte de cabine d'ascenseur à partir du signal de position, dans lequel des moyens de contrôle, qui peuvent être attribués à la porte de cabine d'ascenseur, étant capable d'activer un mécanisme d'ouverture de la porte de cabine d'ascenseur en réponse au signal de libération de la porte de cabine d'ascenseur.

3. Dispositif selon la revendication 1 ou 2,
**caractérisé en ce que**
l'unité de surveillance (60) est réalisée de telle manière que l'unité d'interrupteur est activée en fonction du signal de libération de la porte de cabine d'ascenseur.

4. Dispositif pour identifier une position d'une cabine d'ascenseur (40) ayant une unité de capteur et d'évaluation (20, 22, 24) accommodée dans un boîtier de capteur (10), réalisée pour interagir avec une bande (14) comprenant un codage de langueur et/ou de position, prévue sur la cabine d'ascenseur et reliée à une unité d'interrupteur (12), qui offert un interrupteur de sécurité et/ou une vis platinée pour une fonction d'urgence, en particulier un arrêt d'urgence, de la cabine d'ascenseur, ladite unité de capteur et d'évaluation étant réalisée pour générer un signal de position à partir du codage de langueur et/ou de position,
**caractérisé en ce que**
l'unité de capteur et d'évaluation comprend une unité de position de secours (70), qui est réalisée pour comparer le signal de position à une valeur de position (72) prédéterminée, de préférence stockée, en un état de maintenance diffèrent de l'état normal d'ascenseur de telle manière que l'unité d'interrupteur est déclenchée pour un arrêt d'urgence comme une fonction d'urgence en réponse à atteindre une position de déplacement de la cabine d'ascenseur correspondant à la valeur de position prédéterminée en y dépassant ou en y étant inférieur.

5. Dispositif selon la revendication 4,
**caractérisé en ce que**
la valeur de position prédéterminée correspond à au moins une position de déplacement de la cabine d'ascenseur, ladite position de déplacement étant prévue à un extrémité, de préférence aux deux extrémités, de la bande et ladite cabine d'ascenseur étant espacée de l'extrémité de bande et/ou un extrémité de cage de la cabine d'ascenseur à une distance correspondante à une hauteur de travail d'un travailleur de maintenance.

6. Dispositif selon la revendication 4 ou 5,
**caractérisé en ce que**
l'unité de position de secours interagit avec des moyens de sélection d'état d'interrupteur ou d'opération opérables manuellement et/ou mécaniquement qui peuvent être opérés pour l'activation de l'opération de maintenance.

7. Dispositif selon l'une quelconque des revendications 1 à 6,
**caractérisé en ce que**
l'unité de capteur et d'évaluation est réalisée pour interagir avec la bande portant un codage absolu et pour déterminer des informations de position et/ou de vitesse à partir de ceci.

8. Dispositif selon l'une quelconque des revendications 1 à 7,
**caractérisé en ce que**
l'unité de capteur et d'évaluation est pourvue de manière redondante d'une paire des unités de contrôle (22, 24) électroniques exécutant une détermination de position et/ou de vitesse de la cabine d'ascenseur indépendamment les unes des autres.

9. Dispositif selon l'une quelconque des revendications 1 à 8,
**caractérisé en ce que**
le boîtier de capteur est réalisé en tant qu'unité de chariot de mesure (10) pour être déplacée le long de la bande, l'unité d'interrupteur (12) physiquement séparée et adjacente étant couplée à ladite unité de chariot de mesure (10) par un câble de connexion.

10. Procédé pour opérer le dispositif selon l'une quelconque des revendications 1 à 3 et 7 à 9, **caractérisé par** des étapes suivantes :
- détecter un état d'ouverture d'une porte d'ascenseur de la cabine d'ascenseur,
- identifier une vitesse de mouvement, une accélération et/ou une course de mouvement de la cabine d'ascenseur pendant l'état d'ouverture de la porte d'ascenseur en balayant et en évaluant un codage de langueur et/ou de position prévu le long d'une bande attribuée à la porte d'ascenseur, et
- déclencher une fonction d'urgence, en particulier un arrêt d'urgence, de la cabine d'ascenseur si la vitesse de mouvement, l'accélération et/ou la course de mouvement dépasse une valeur seuil prédéterminée, en particulier stockée et/ou codée.

11. Procédé pour opérer le dispositif selon l'une quelconque des revendications 4 à 9, **caractérisé par** des étapes suivantes :
- activer un état de maintenance de l'appareil d'ascenseur,
- comparer un signal de position obtenu par une évaluation d'un codage de position prévu le long d'une bande à au moins une valeur de position correspondante à une position d'arrêt de secours dans l'appareil d'ascenseur, et
- déclencher un arrêt d'urgence comme une fonction d'urgence de la cabine d'ascenseur si la cabine d'ascenseur atteint à ou dépasse la position d'arrêt de secours le long de la bande.
